# EUROPEAN PATENT APPLICATION

(11) **EP 2 163 825 A1**
(43) Date of publication of application: **17.03.2010**
(21) Application number: 08164015.3
(22) Date of filing: 10.09.2008
(51) Int. Cl.: F24C 15/10, A47J 36/36

(54) **Combinational energy-saving apparatus for heating pot**

(71) Applicant: Fang, Tsan-Tang, Tainan City 701 (TW)
(72) Inventor: Fang, Tsan-Tang, Tainan City 701 (TW)
(74) Representative: Dossmann, Gérard

(57) **Abstract**

The present invention is to provide a "combinational energy-saving apparatus for heating pot" comprising a pair of mounting hoops (1) and two or at least two energy-saving slats (2), wherein said mounting hoop (1) is adjustable in dimension to fit various heating pots of different diameters while said energy-saving slat (2) with heat insulating function is to be fixed on the mounting hoop (1) in encompassment manner. Thereby, the thermal energy from the heating device/source is converged to the heating pot with less possibility in leakage so that not only the cooking time can be shortened but also the energy-saving effect can be achieved.

## Description

The present invention relates to a "combinational energy-saving apparatus for heating pot", particularly for one that can be fixed on the peripheral of the heating pot to prevent the thermal energy from transmission or leakage so that not only the cooking time can be shortened but also the energy-saving effect can be achieved.

Generally speaking, the most popular cooking way is to put the heating pot over the heating device (for example gas stove, electromagnetic stove or vapor stove and the like) for directly heating. Because the heating pot is exposed to the air all the time during cooking course, the partial thermal energy will be absorbed by the ambient air via wall of the heating pot, which results in elongating the cooking time and consuming more energy. Moreover, if multiple heating pots are cooked at the same time, the issue of thermal energy leakage in the ambient air becomes more serious, which also incurs the ambient temperature rises considerably, so that the working environment becomes too sultry, which causes the extremely uncomfortable sense for the staff members. Furthermore, the foregoing issue is more obvious if the ambient temperature fluctuates to have more temperature difference. When cooking in severe cold area, other than the issue of thermal energy leakage in the ambient air, the carbon discharging issue and energy-consuming issue become serious enough to be cared about in terms of the energy-conservation and environmental protection. Having realized and addressed the issues aforesaid, the applicant of the present invention devotes himself to research and develop in improving the conventional heating pot for solving the issues described above. Eventually, the "combinational energy-saving apparatus for heating pot" of present invention is successfully worked out after testing and revising constantly.

Accordingly, the object of the present invention is to provide a "combinational energy-saving apparatus for heating pot" comprising a pair of mounting hoops and two or at least two energy-saving slats, wherein said mounting hoop is made of metal material with plural through holes being disposed thereon for being run through by screwing element while said energy-saving slat, whose shell is made of metal material and shaped into hollow strip with heat insulating pack being filled therein, is to be fixed on the mounting hoop.

The "combinational energy-saving apparatus for heating pot" is recited as above, wherein, said mounting hoop has plural fixing holes disposed thereon in even-spaced manner and each said energy-saving slat has a perforated hole created on each upper end and lower end respectively so that the each said energy-saving slat is fixed on the peripheral of the mounting hoop by running a screwing element through each perforated hole and the corresponding fixing hole.

The "combinational energy-saving apparatus for heating pot" is recited as above, wherein, each said energy-saving slat has a magnet embedded on suitable position thereof such that each said energy-saving slat is held on the mounting hoop by attraction of the magnet.

The "combinational energy-saving apparatus for heating pot" is recited as above, wherein, said mounting hoop has plural fixing holes disposed thereon in even-spaced manner, and each said energy-saving slat has a perforated hole created on each upper end and lower end respectively for being securely fixed on the outer peripheral of said mounting hoop by running a screwing element through the perforated hole of each said energy-saving slat and the selectively corresponding fixing hole of said mounting hoop; as well as each said energy-saving slat also has a magnet embedded on suitable position thereof such that said energy-saving slat is held on the mounting hoop by attraction of the magnet too.

The "combinational energy-saving apparatus for heating pot" is recited as above, wherein, said mounting hoop, which is shaped into strap ring, has a screwing bore created in one end thereof while a longitudinal array of multiple adjustable bores created in another end thereof so that a screwing element can run through the screwing bore and anyone of the adjustable bores in arbitrarily selective manner to form a closed mounting hoop by itself in accordance with desired diameter thereof.

The "combinational energy-saving apparatus for heating pot" is recited as above, wherein, each said heat insulating pack in the energy-saving slat is constructed by a core of light refractory plate enclosed by an envelope of pyro-resistant refractory glass fiber fabric in preferable heavy-duty type.
FIG. 1 is the exploded perspective schematic view of the present invention.
FIG. 2 is the perspective schematic view showing the structure of the energy-saving plate for the present invention.
FIG. 3 is the perspective schematic view showing the assembly operation of the present invention.
FIG. 4 is the front schematic view showing the assembly operation of the present invention.
FIG. 5 is the schematic view showing the first enlarging diameter adjustment of the mounting hoop for the present invention.
FIG. 6 is the schematic view showing the second reducing diameter adjustment of the mounting hoop for the present invention.
FIG. 7 is the schematic view showing the other alternative exemplary embodiment for the present invention.
FIG. 8 is the perspective schematic view showing the associated pot cover being used in coordination manner for the present invention.

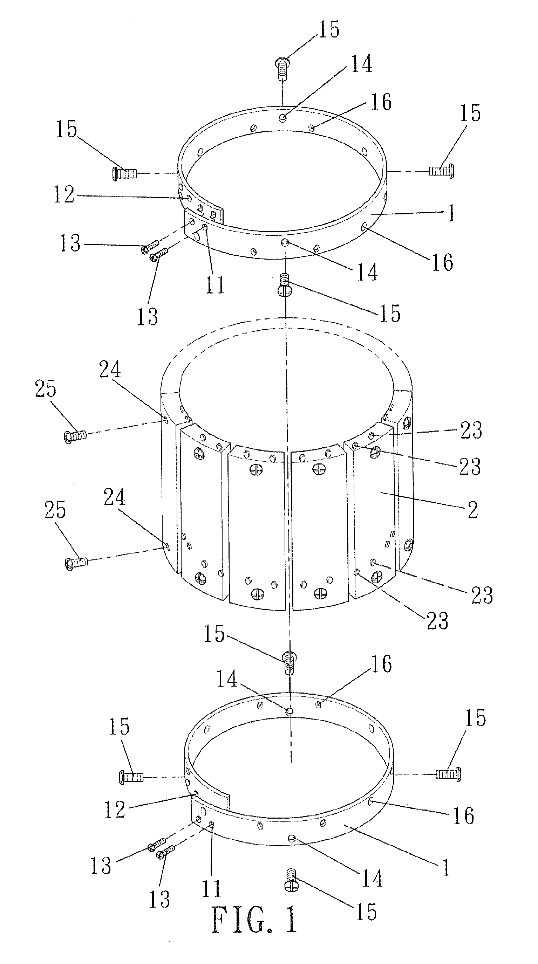

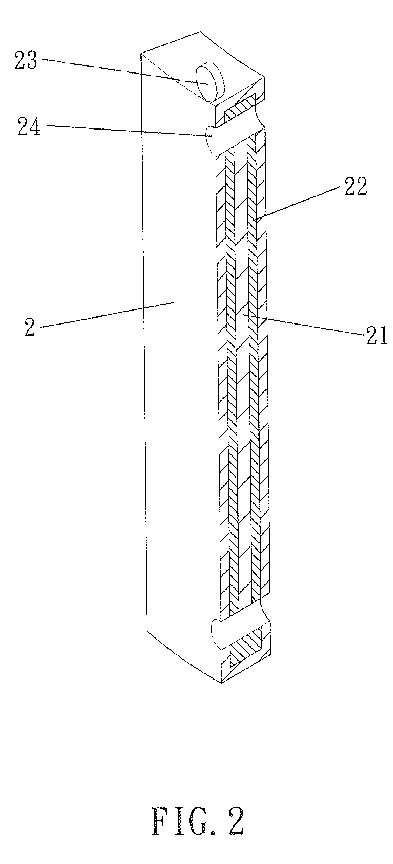

The technological concepts and means of the present invention will be described in the following preferred exemplary embodiments with associated drawings in detailed manner for your perusal and better understanding. Firstly, please refer to FIGS. 1 and 2 for the primary preferred exemplary embodiment of the present invention. The "combinational energy-saving apparatus for heating pot" of the present invention comprises a pair of mounting hoops 1 and two or at least two energy-saving slats 2, wherein:
Said mounting hoop 1, which is made of metal material preferably magnetic stainless steel and shaped into strap ring as shown in the FIG. 1, has plural through holes 14 disposed thereon for being run through by screwing element 15, plural fixing holes 16 disposed thereon in even-spaced manner, and a screwing bore 11 created in one end thereof while a longitudinal array of multiple adjustable bores 12 created in another end thereof so that a screwing element 13 can run through the screwing bore 11 and anyone of the adjustable bores 12 in arbitrarily selective manner to form a closed mounting hoop 1 by itself in accordance with desired diameter thereof; and
Said energy-saving slat 2, whose shell is made of metal material preferably stainless steel or aluminum and shaped into hollow strip with heat insulating pack being filled therein as shown in the FIGS. 1 and 2, has a magnet 23 embedded on suitable position near the top end thereof and a perforated hole 24 created on each upper end and lower end respectively for being run through by a screwing element 25, wherein said heat insulating pack is constructed by a core of light refractory plate 21 enclosed by an envelope of pyro-resistant refractory glass fiber fabric 22 in preferable heavy-duty type.

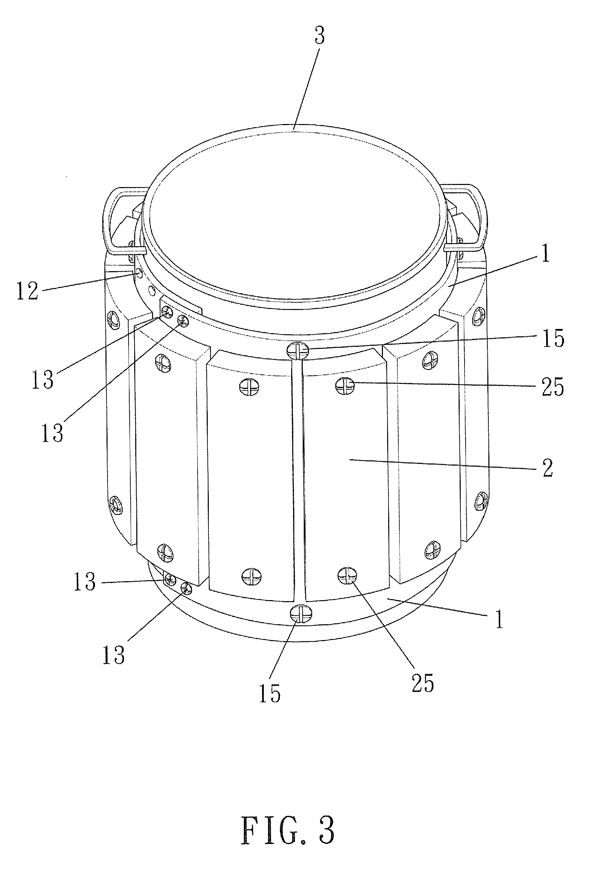

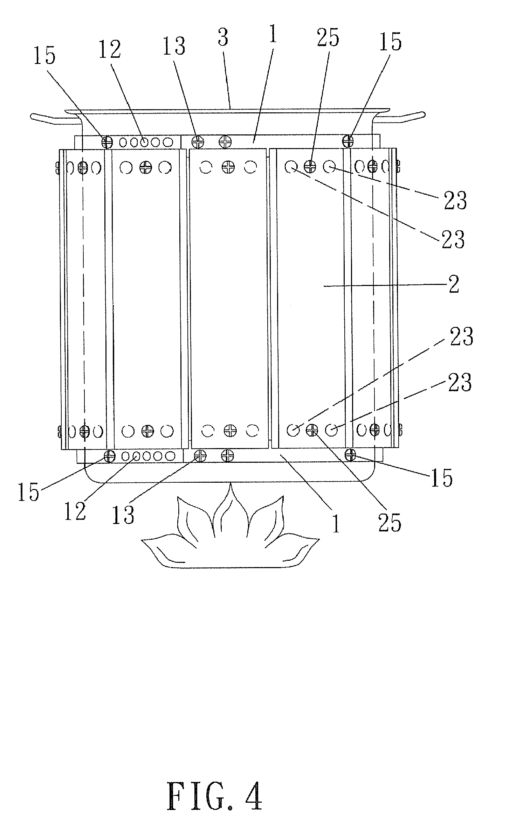

Please further refer to FIGS. 3 and 4. The operational steps for the assembly operation of the present invention are described as below:
Firstly, fit top mounting hoop 1 around the top peripheral of a heating pot 3;
Secondly, drive a screwing element 15 through the through hole 14 on the upper end of the top mounting hoop 1 up to end of the screwing element 15 touching against the outer wall of the heating pot 3 so that a cylindrical gap is sandwiched between the outer wall of the heating pot 3 and inner wall of the top mounting hoop 1;
Thirdly, wrap each energy-saving slat 2 orderly on the peripheral of the mounting hoop 1 such that each upper perforated hole 24 of the energy-saving slat 2 in alignment with each fixing hole 16 on the top mounting hoop 1 while each energy-saving slat 2 is held on the top mounting hoop 1 by attraction of the magnet 23 therein;
Fourthly, orderly run each screwing element 25 through each aligned upper perforated hole 24 of the energy-saving slat 2 and each fixing hole 16 on the top mounting hoop 1 aforesaid so that the energy-saving slats 2 entirely encompass the peripheral of the top mounting hoop 1, and
Finally, proceed the same procedure aforesaid for the bottom mounting hoop 1 to finish the assembly operation completely.

Functionally, when a heating pot 3 is put on a heating device/source such as gas fire shown on the FIG. 4 and the like, the quantity of the astray thermal energy, which is dissipated from the heating pot 3, being absorbed by the ambient cold air is reduced because the astray thermal energy is confined in the compass of the energy-saving slats 2, which entirely round the peripheral of the heating pot 3; Thereby, most of the thermal energy emanated by the heating device/source is converged to the heating pot 3 with less possibility in leakage so that not only the cooking time can be shortened but also the energy-saving effect and appeal can be achieved due to reducing energy consumption.

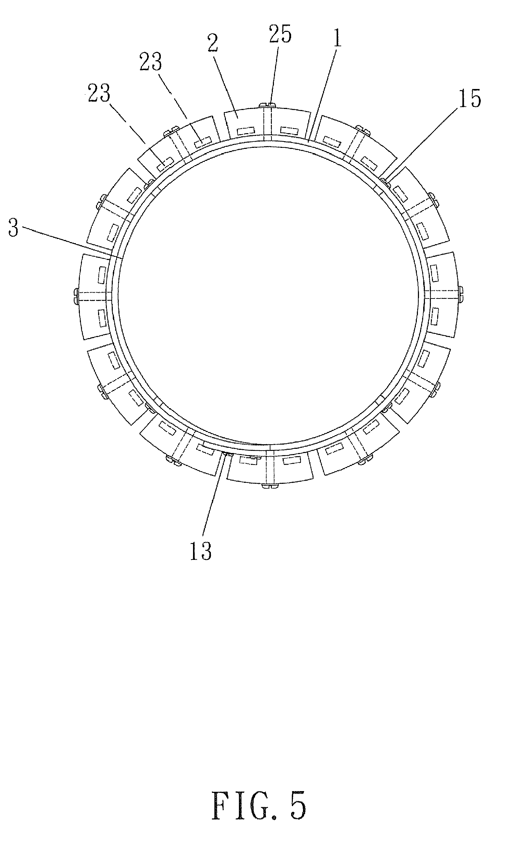

Moreover, for fitting with various heating pots 3 of different diameters, the diameter adjusting feature for the mounting hoop is provided with the present invention. Please refer to the FIG. 5. When the diameter of the heating pot 3 becomes larger, after unscrew the screwing element 13 away from the mounting hoop 1, the screwing bore 11 on one end of the mounting hoop 1 can be relocated to joint the selected adjustable bore 12 nearer to the other end of the mounting hoop 1 so that the diameter of the mounting hoop 1 is properly enlarged to fit the larger diameter of the heating pot 3; Meanwhile, the number of the energy-saving slat 2 should be increased in accordance with the requirement of the enlarged mounting hoop 1.

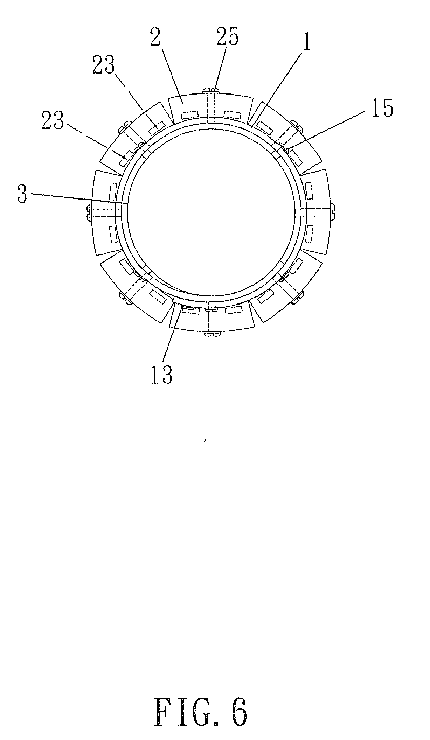

Conversely, please refer to the FIG. 6. When the diameter of the heating pot 3 becomes smaller, the screwing bore 11 on one end of the mounting hoop 1 can be relocated to joint the selected adjustable bore 12 farther to the other end of the mounting hoop 1 so that the diameter of the mounting hoop 1 is properly reduced to fit the smaller diameter of the heating pot 3; Meanwhile, the number of the energy-saving slat 2 should be decreased in accordance with the requirement of the reduced mounting hoop 1.

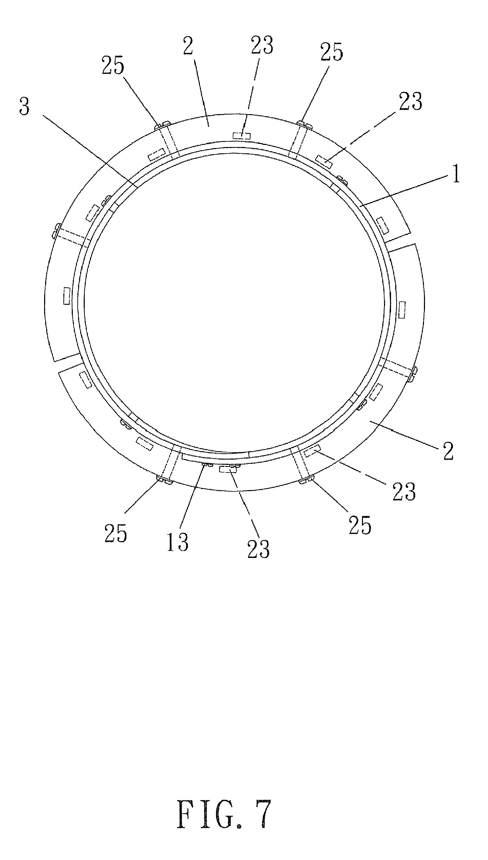

Besides, it should be stressed that the number of the energy-saving slat 2 is free to define instead of confinement to the number shown in the FIGS. 1 through 6 as long as all energy-saving slats 2 of defined number can entirely encompass the peripheral of the mounting hoop 1. For example as shown in the FIG. 7, only two semicircular energy-saving slats 2 are used to achieve the same function, effect and encompassment for the peripheral of the mounting hoop 1 as previous exemplary embodiments, wherein the number of the associated magnet 23 and the number of the associated screwing element 25 can be appropriately altered in accordance with the requirement from the user or operator.

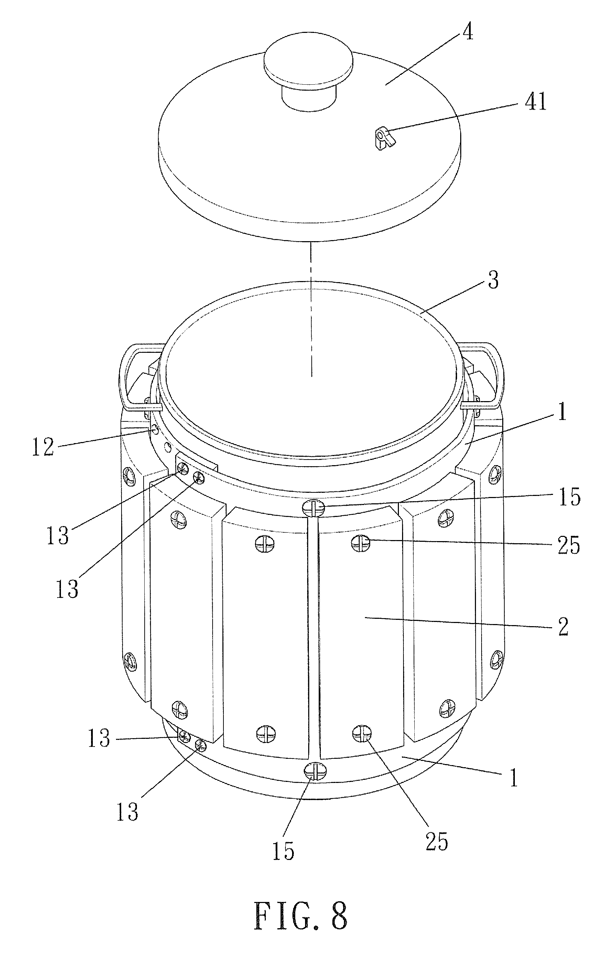

Furthermore, the "combinational energy-saving apparatus for heating pot" of the present invention can be used with associated pot cover 4 as shown in the FIG. 8. The pot cover 4, whose shell is made of metal material and shaped into hollow round saucer with heat insulating packet, whose structure is similar to that of the heat insulating pack aforesaid but different in shape and size, being filled therein, has air regulating vent 41 disposed thereon for discharging the exceeding steam pressure in the heating pot 3; Thereby, the upper astray thermal energy dissipated from the heating pot 3 is blocked by the pot cover 4 so that not only the cooking time can be further shortened but also the energy-saving effect and appeal can be further enhanced due to further reducing energy consumption accordingly.

Through disclosure heretofore, some advantages of the present invention are recapitulated as below:
1. Energy-saving and environmental protection effects:
   The thermal energy of the heating pot 3 is isolated from ambient cold air by the energy-saving slats 2 so that not only the cooking time can be shortened but also both effects in the reducing carbon discharging quantity and saving energy consumption can be enhanced.
2. Adjustable dimension:
   The diameter of the mounting hoop 1 can be arbitrarily adjusted by means of longitudinal array of multiple adjustable bores 12 in an end thereof to fit various heating pots 3 of different diameters so that high adaptability and convenience are provided by the present invention.
3. Carry-on easiness:
   The separating design of the mounting hoop 1 and the energy-saving slat 2 with simplicity in assembly and disassembly make it very convenient not only for household usage but also for carrying during travel.
4. Comprehensive application:
   Other than the household cooking and food business, the energy-saving apparatus of the present invention can also be vastly used in the industry such as melting furnaces of copper, aluminum, magnesium, zinc and the like. If such furnace is enwrapped by the energy-saving apparatus of the present invention, the energy-saving and environmental protection effects can also be achieved.

In conclusion, the technological means disclosed by the present invention, which not only can solve all the previous issues of the conventional heating pots mentioned above but also can achieve the expected objects and effects, has not being published in public. Therefore, the present invention features in innovative novelty beyond the obviousness of the prior arts with practical application usage, which meet the basic criterion of patentability stipulated by the patent law. Accordingly, we submit the patent application in accordance with the related laws for your perusal and examination with appeal for your kind grant of the patent approval, which will be greatly appreciated by us.

However, all the disclosure heretofore is only the preferred exemplary embodiments of the present invention, which is not intended for limiting the scope of the embodiment for the present invention. Therefore, any equivalent alteration and modification, which does not depart from the essence and content in the specifications of the present invention, should be reckoned and considered in the range of the claims for the present invention.

## Claims

1. A "combinational energy-saving apparatus for heating pot" comprises a pair of mounting hoops and two or at least two energy-saving slats, wherein said mounting hoop is made of metal material with plural through holes being disposed thereon for being run through by screwing element while said energy-saving slat, whose shell is made of metal material and shaped into hollow strip with heat insulating pack being filled therein, is to be fixed on the mounting hoop.

2. The "combinational energy-saving apparatus for heating pot" is recited and claimed in the claim 1, wherein, said mounting hoop has plural fixing holes disposed thereon in even-spaced manner and each said energy-saving slat has a perforated hole created on each upper end and lower end respectively so that the each said energy-saving slat is fixed on the peripheral of the mounting hoop by running a screwing element through each perforated hole and the corresponding fixing hole.

3. The "combinational energy-saving apparatus for heating pot" is recited and claimed in the claim 1, wherein, each said energy-saving slat has a magnet embedded on suitable position thereof such that each said energy-saving slat is held on the mounting hoop by attraction of the magnet.

4. The "combinational energy-saving apparatus for heating pot" is recited and claimed in the claim 1, wherein, said mounting hoop has plural fixing holes disposed thereon in even-spaced manner, and each said energy-saving slat has a perforated hole created on each upper end and lower end respectively for being securely fixed on the outer peripheral of said mounting hoop by running a screwing element through the perforated hole of each said energy-saving slat and the selectively corresponding fixing hole of said mounting hoop; as well as each said energy-saving slat also has a magnet embedded on suitable position thereof such that said energy-saving slat is held on the mounting hoop by attraction of the magnet too.

5. The "combinational energy-saving apparatus for heating pot" is recited and claimed in the claim 1, wherein, said mounting hoop, which is shaped into strap ring, has a screwing bore created in one end thereof while a longitudinal array of multiple adjustable bores created in another end thereof so that a screwing element can run through the screwing bore and anyone of the adjustable bores in arbitrarily selective manner to form a closed mounting hoop by itself in accordance with desired diameter thereof.

6. The "combinational energy-saving apparatus for heating pot" is recited and claimed in the claim 1, wherein, each said heat insulating pack in the energy-saving slat is constructed by a core of light refractory plate enclosed by an envelope of pyro-resistant refractory glass fiber fabric in preferable heavy-duty type.
